# EUROPÄISCHE PATENTANMELDUNG

(11) **EP 2 016 825 A1**
(43) Veröffentlichungstag der Anmeldung: **21.01.2009**
(21) Anmeldenummer: 07112811.0
(22) Anmeldetag: 20.07.2007
(51) Int. Cl.: A01N 25/08, A01N 59/16, D06M 11/83, C03C 3/00

(54) **Antimikrobielle anorganische Wirkstoffkomponente mit niedriger Abrasion**

(71) Anmelder: Sanitized AG, 3400 Burgdorf (CH)
(72) Erfinder: Zeller, Dietmar, 3063 Ittigen (CH)
(74) Vertreter: Jacobi, Markus Alexander

(57) **Zusammenfassung**

Der Einsatz von bioziden anorganischen Wirkstoffkomponenten, insbesondere Silber in Glas, Zeolithen, Zirkoniumphosphat oder Titandioxid, in synthetischen Spinnfasern, Folien und Formteilen mit besonders glatter Oberfläche führt zu einer Vermeidung von Abrasion während der Herstellung. Die Herstellung der bioziden Partikel erfolgt dabei durch Nassmahlung.

## Beschreibung

Die Erfindung betrifft eine biozide, insbesondere antimikrobielle anorganische Wirkstoffkomponente (W) mit niedriger Abrasion, die für das textile Spinnen oder z. B. zur Herstellung dünner Schichten eingesetzt werden kann.

Biozide Wirkstoffe werden in breitem Umfang zum Schutz von Materialien vor Befall durch Bakterien, Pilze und Algen und zur Verbesserung der Hygiene eingesetzt. Das wesentliche Schutzziel ist dabei die Verhinderung oder Reduktion von Befall durch Mikroben wie Bakterien, Pilze, Hefen und Algen sowie durch Milben. Dabei werden die bislang dominierenden organischen Wirkstoffe zunehmend durch anorganische Wirkstoffe ergänzt und ersetzt.

Es besteht daher ein ständiger Bedarf an der Entwicklung von neuen bioziden und antimikrobiellen Wirkstoffkomponenten, die möglichst viele der folgenden Kriterien erfüllen:
- Sie sollen mit den üblichen Standardmethoden der Industrie appliziert werden können,
- Sie sollen mit möglichst vielen anderen Komponenten kombinierbar sein,
- Sie sollen möglichst auch bei höheren Temperaturen beständig sein,
- Sie sollen möglichst wenig Einfluss auf die sonstigen Eigenschaften der Materialien haben,
- Die antimikrobiellen Wirkstoffe sollen möglichst behördlich (z. B. unter EPA und unter BPD) notifiziert sein oder registriert werden können,

Der vorliegenden Erfindung liegt daher als eine Aufgabe zugrunde, ein Verfahren und eine Wirkstoffkomponente für die biozide Ausrüstung von verschiedenen Materialien zur Verfügung zu stellen, welche die vorstehend aufgeführten Kriterien weitgehend erfüllen. Antibakterielle Zubereitungen und ganz allgemein biozide Mittel werden bereits seit langem in vielen Bereichen des Alltags eingesetzt, beispielsweise zur Bekämpfung von schädlichen Bakterien, Pilzen oder Algen. Im Hinblick auf die stetig wachsenden Anforderungen an antimikrobielle Komponenten, zum Beispiel bezüglich Kosten-, Gesundheits- und Umweltschutzaspekten, ist eine Weiterentwicklung dieser bekannten Produkte erforderlich.

Ein bekannter Vorteil anorganischer Wirkstoffe besteht in der hohen Temperaturbeständigkeit und damit der Eignung, hohe Verarbeitungstemperaturen unbeschadet zu überstehen. Als geeignet erwiesen haben sich hierbei z. B. Silber-haltige Wirkstoffe, die über eine besonders hohe Wirkung gegenüber Bakterien verfügen. Seit Jahrhunderten ist es bekannt, dass Silber und Silberverbindungen eine keimtötende bzw. antimikrobielle Wirkung aufweisen können.

Der Einsatz von Silberverbindungen als antimikrobielle Agenzien ist jedoch aus verschiedenen Gründen auf bestimmte Gebiete begrenzt. Silberpräparationen, die für Konservierungszwecke beschrieben wurden, sind z. B. elementares Silber in kolloidaler Form, Dispersionen nanopartikularen Silbers, Silberverbindungen wie Silberoxid oder anorganische und organische Silbersalze.

Die Konservierung mittels Silber hat unter anderem den Effekt, dass Silberverbindungen, insbesondere in Gegenwart von reduzierenden Verbindungen und bei Lichteinfluss, zu Verfärbungen führen können. Durch den Einsatz höherer Silber-Konzentrationen wird das Risiko einer Verfärbung verstärkt, was gerade im Bereich der Ausrüstung von Fasern und Textilien unerwünscht ist. Eine vorzeitige unerwünschte Freisetzung von Silber kann jedoch verhindert werden, indem das Silber oder die Silberverbindungen in Trägermaterialien, wie z. B. Kieselsäuren, Titandioxid, Zirkoniumphosphat, Zeolithen oder Glas eingebettet werden.

Beispiele für gängige Einsatzgebiete von Silber als antimikrobielles Agens sind Beschichtungen für Haushaltsgeräte, der Bereich der Medizin und der Pharmazie sowie die Wasserbehandlung. Auch im Bereich der technischen Konservierung, z.B. bei Klebstoffen, Dichtstoffen, Beschichtungsstoffen und Kunststoffen, ist Silber bekannt.

In der Patentanmeldung DE-A 103 46 387 wird beispielsweise Silber als mögliches Konservierungsmittel genannt.

In diesem Dokument wird der Einsatz von Silber-haltigen Zubereitungen zur antimikrobiellen Ausrüstung von harten und weichen Oberflächen beschrieben. Auch wird der Einsatz von Silberionen oder Silber auf Trägern, in Lösungen und Dispersionen für die Behandlung von Textilien und anderen Materialien beschrieben.

Silber in Form freiwerdender Ag⁺-Ionen ist bereits in sehr geringen Konzentrationen im unterem ppm- Bereich hochtoxisch für den Stoffwechsel und die Vermehrung von Bakterien. Das betrifft gram-positive als auch gram-negative Bakterien. In anderen Anwendungen werden ähnliche antimikrobielle Wirkungen mit weiteren metallischen Wirkstoffen erreicht. Auch werden antibakterielle und fungizide Wirkung mit aus toxikologischer Sicht bedenklichen Schwermetallen wie Kupfer, Cadmium, Nickel, Zinn, Blei, Chrom oder Arsen erreicht. Bor und Zink nehmen hierbei eine Zwischenstellung ein, sie sind einerseits weniger stark antimikrobiell wirksam, andererseits toxikologisch weitgehend akzeptiert. Außerdem wird dem Element Bor eine gewisse Wirkung gegen Milben zugeschrieben.

Silber als Metall ist chemisch sehr stabil und zeigt unter Gebrauchsbedingungen wenig Neigung Ag⁺-Ionen freizusetzen. Deshalb bedarf es zur Freisetzung relativ hoher Konzentrationen und/ oder großer Oberflächen. Silbersalze hingegen stellen in Gegenwart von Wasser relativ leicht Ionen zur Verfügung. Beiden Einsatzmöglichkeiten haftet jedoch die Eigenschaft an, dass Silberionen sowohl fotochemisch als auch katalytisch recht aktiv sind, was einerseits zu der aus der Photochemie bekannten Schwärzung führt und andererseits die antimikrobielle Wirkung des Silbers blockiert. Verursacht wird dies durch die Bildung von Silberoxid, oder bei Gegenwart von Schwefel durch Bildung des thermodynamisch noch stabileren Silbersulfides. Auch eine direkte Verarbeitung von ungeschütztem Silber in chemischen und Temperatur exponierten Prozessen, wie z. B. thermoplastischen Verformungen einschließlich des Spinnens, kann zu einem Problem werden.

Ein eleganter technischer Ausweg besteht darin, das Silber in eine Matrix einzubauen, in der es einerseits geschützt Verarbeitungsprozesse thermischer und chemischer Natur übersteht ohne zerstört, gelöst oder verbraucht zu werden, und in der es andererseits nach der Verarbeitung im jeweiligen Substrat weiter zur Verfügung steht.

Mit dem Einbau von Silber als Salz, Oxid, elementares Silber oder in anderer Form (z. B. Legierung) in eine Matrix oder einen Ionentauscher kann das Silber vor temporären äußeren Einflüssen geschützt werden. Dabei wird das Silber je nach Prozess vollständig eingebaut, mehr oder weniger eingebaut oder an der Oberfläche des Trägers fixiert.

Dazu bestehen verschiedene Technologien, die von verschiedenen Ansätzen ausgehen und die z. B. auf folgenden Trägermaterialien basieren: Glas und bioaktives Glas mit verschiedenen Zusammensetzungen, sowohl Silikatglas bis völlig silikatfrei, oder Phosphatglas mit verschiedenen Anteilen anderer Elemente, Glas und Glas-keramisches Trägermaterial, Zeolithe, Zirkoniumphosphat, Titandioxid, Quarz als Siliziumdioxid, und weitere anorganische Materialien.

Alle diese mit Silber dotierten Trägermaterialien besitzen den Vorteil einer hohen thermischen Stabilität und können somit direkt in die Masse vor dem Spinnen, Extrudieren oder Spritzen eingebracht werden.

Dabei besitzen alle diese Trägermaterialien, ungeachtet ob mit kristalliner oder amorpher Struktur, jedoch den Nachteil, eine mehr oder wenig große Abrasion aufzuweisen. Selbst wenn die Abrasion vergleichsweise gering ist, tritt bei der Verarbeitung der bekannten, zum Teil oben bereits beschriebenen Trägermaterialien, eine negative Beeinflussung der Verarbeitung auf.

In dem Patent US 6,831,028 werden zur Erzeugung von antimikrobiellen Gläsern mehrstufige Trockenmahlprozesse beschrieben, bei denen z. B. Teilchengrößen von 0,1 bis 300 Mikrometer erzeugt werden. Die Produkte dieses auf Silber-haltige Glaspartikel angewandten Trockenmahlverfahrens sind für eine antimikrobielle Ausrüstung über das Spinnverfahren in der Spinnmasse verwendbar, vornehmlich für die Herstellung von PES-, PA- aller Typen, PP-und andere Polyolefine, Aramid-Endlosfilamente und Stapelfasern.

Sie verursachen jedoch bei Spinnen, Strecken, Texturieren und der weiteren Verarbeitung einen erhöhten Verschleiß von Fadenführern und Fadenleitelementen. Dieser Verschleiß wiederum führt zu einer Beschädigung der genannten Fadenleitelemente, die wiederum Fibrillen oder Fadenbrüche verursachen.

In dem Schutzrecht JP 71-18 925 werden Tenside zur Verringerung der Abrasivität von Zeolithen vorgeschlagen. Diese Kombination kann jedoch nur eine gewisse Glättung des Fadenlaufes bewirken, aber nicht das oben beschriebene Problem zufrieden stellend beseitigen.

In JP 62-210098A (1987) werden bereits Bor-haltige Gläser mit einem Gehalt von etwa 1 Gew.-% an Silberoxid beschrieben, die eine antimikrobielle Wirkung aufweisen. In JP 01-313531A (1989) werden bereits Silberoxid-haltige Silikat/Borat-Gläser mit einer antimikrobiellen Wirkung einer synthetischen Harzzusammensetzung beigefügt. Es treten jedoch Schwierigkeiten mit der Transparenz der Materialien und der Mischbarkeit der Komponenten auf.

Es ist bekannt, dass die Verarbeitbarkeit der Silberkomponente dadurch verbessert werden kann, dass man die Silberkomponente auf anorganische Trägermaterialien aufbringt. Hierzu können geeignete Trägermaterialien wie Gläser beispielsweise mit kolloidalen Lösungen imprägniert oder mit feinteiligen Silberverbindungen vermischt werden. Es ist auch möglich, die Silberkomponente zusammen mit den Trägermaterialien unter Zugabe geeigneter Granulationshilfsmittel zu granulieren.

Als Trägermaterialien sind verschiedene Gerüststoffe geeignet, beispielsweise Zeolithe. Daneben können auch poröse Stoffe wie Kieselsäuren, beispielsweise pyrogene Kieselsäuren, Bentonite, polymere Materialien oder Diatomeenerde ("Kieselgur") als Trägermaterialien dienen, ferner keramische, zum lonenaustausch befähigte Materialien, beispielsweise auf der Basis von Zirkoniumphosphat, oder auch Gläser, beispielsweise die in der oben beschriebenen US 6,831,028 beschriebenen Gläser.

Das Verfahren zum Einarbeiten oder Aufbringen von Silberionen in oder auf solche anorganischen Verbindungen ist im Prinzip nicht auf bestimmte Verfahren beschränkt. Es gibt verschiedene Verfahren zum Aufbringen, wie z. B. ein Verfahren durch physikalische oder chemische Adsorption, ein Verfahren durch Ionenaustauschreaktion, ein Verfahren durch Einsatz eines Binders, ein Verfahren durch Einbringen einer Silberverbindung in eine anorganische Verbindung und ein Verfahren durch Ausbildung einer dünnen Schicht der Silberverbindung auf der Oberfläche einer anorganischen Verbindung durch eine Technik zum Bilden einer dünnen Schicht, wie Dampfsedimentation, Auflösen und Fällen oder Sputtern. Ebenso kann eine direkte Einarbeitung einer Silberverbindung während der Herstellung des anorganischen Trägermaterials erfolgen.

Solche Komposit-Teilchen aus einem Glas-Trägermaterial und einer Silberkomponente können gegebenenfalls weitere Inhaltsstoffe aufweisen. Bewährt hat sich beispielsweise der Einsatz von aktivierenden Edelmetallen wie Gold, das die antimikrobielle Wirkung der Silberkomponente aktiviert. Auch möglich ist der Einsatz von Silber in Verbindung mit weiteren bioziden Komponenten in einem Trägermaterial.

Die Herstellverfahren der antimikrobiellen anorganischen Teilchen können negativ beeinflusst werden durch den Einsatz von mit Silber dotierten Trägermaterialien, in denen dünne Materialien hergestellt werden, wie z. B. Folien, Blasfolien oder Co-Extrusionsfolien- oder Platten.

Das betrifft insbesondere die Oberfläche der Produkte selbst, aber auch die benutzten Werkzeuge sowie die zur weiteren Bearbeitung der hergestellten Produkte wie Thermoforming benutzten Werkzeuge, deren Oberfläche unter der abrasiven Wirkung der bearbeiteten Produkte leidet, abgenutzt wird und selbst unerwünschten Abrieb erzeugt.

Grundsätzlich werden auch andere Verarbeitungsverfahren, die sich lediglich mit der Herstellung kompakter Teile beschäftigen, durch abrasive Teile beeinträchtigt. Eine zu grobe Oberflächenstruktur der antimikrobiellen Ausrüstung kann wie oben beschrieben sowohl die Qualität der Oberfläche der Produkte als auch die Lebensdauer der Werkzeuge beeinträchtigen.

Ein gewisser Teil der Abrasion kann durch die verwendete Korngröße der antimikrobiellen Ausrüstung reduziert werden. Dabei verändert die herkömmliche Art der Zerkleinerung zwar die Größe der Teilchen, jedoch nicht die Form der Bruchstücke.

Zur Entfaltung der antimikrobiellen Wirkung der Silber- Additive ist ein gewisser Oberflächenkontakt erforderlich.

Erst bei Vorhandensein von Feuchtigkeit kann sich in der Regel eine Bakterienpopulation entwickeln. Gerade auch unter der Bedingungen des vorhandenen Wassers können sich einzelne Ag⁺-Ionen aus der Matrix lösen und ihre antimikrobielle Wirkung entfalten.

Falls jedoch die Partikel zu klein sind, kann in Abhängigkeit vom verwendeten Polymer und vom angewandten Verarbeitungsverfahren eine Art Versiegelung der Oberfläche eintreten, die die antimikrobielle Wirkung der Silber- Ionen verhindert. Deshalb kann zu feines Mahlen zwar die Abrasionsprobleme bei der Verarbeitung lindern, jedoch auch dazu beitragen, die antimikrobielle Wirkung des bioziden Wirkstoffs zu verhindern.

Gewöhnlich erfolgt die Aufbereitung der anorganischen antimikrobiellen Additive nach deren Herstellung aus dem Grobgut durch Zerkleinerung, wie Brechen und Stufen weisem Mahlen mit abschließendem Feinmahlen auf die gewünschte oder erreichbare Korngröße. Häufig werden dabei Kugelmühlen verwendet, mit denen eine vergleichsweise exakte durchschnittliche Korngröße eingestellt werden kann. Der dabei angewandte Trockenmahlprozess führt allerdings dazu, dass der Energieeintrag auch zur unspezifischen statistischen Spaltung der Partikel führt, wobei die Partikel eine kantige und grobe Oberflächenstruktur erhalten.

Die Vermeidung von scharfkantigen antimikrobiellen Teilchen ist eine Aufgabe der vorliegenden Erfindung.

Diese Aufgabe wird gelöst durch die Bereitstellung einer bioziden (und als Untergruppe hiervon insbesondere auch einer antimikrobiellen) Wirkstoffkomponente (W) auf Basis von nass gemahlenen anorganischen Trägerpartikeln (T), die eine Silberkomponente (S) und/oder andere antimikrobielle Komponenten enthalten. Die anorganischen Trägerpartikel (T) sollen dabei eine glatte Oberfläche aufweisen, vorzugsweise ohne scharfe Kanten. Die glatte Oberfläche der Partikel zeigt sich bei mikroskopischen Untersuchungen durch das Fehlen von scharfen Kanten und z. B. beim Einsatz bei einem Spinn-Prozess durch eine niedrige Abrasion, beispielsweise nachweisbar durch den Honigmann-Test.

Eine weitere Ausführungsform der Erfindung betrifft eine biozide Wirkstoffkomponente (W), die als fein gemahlene anorganischen Trägerpartikel (T) amorphe Partikel, insbesondere Glaspartikel, mit einer mittleren Teilchengröße von 0.01 bis 100 µm, vorzugsweise von 0.1 bis 30 µm aufweist. Dabei werden Partikel vorzugsweise mit einem Gehalt an Silberkomponente (S) von 0,01 bis 10 Gew.-% eingesetzt.

Eine weitere Ausführungsform der Erfindung betrifft eine biozide oder antimikrobielle Wirkstoffkomponente (W), die als anorganischen Trägerpartikel (T) Glaspartikel mit einer mittleren Teilchengröße von 0.1 bis 30 µm und einem Gehalt an Silberkomponente (S) von 0,1 bis 5 Gew.-% aufweisen.

Als anorganische Trägerpartikel (T) werden gerne Bor-haltige und/oder Phosphat-haltige Glaspartikel eingesetzt, die als Silberkomponente (S) z. B. ein Silberoxid oder ein Silbersalz enthalten. Die Partikel sollten eine glatte Oberfläche aufweisen, wobei diese durch ein Nass-Mahlverfahren erzeugt werden kann.

Die Partikel weisen eine glatte Oberfläche auf, was z. B. durch ein Nass-Mahlverfahren mittels einer Kugelmühle oder einem Dreiwalzwerk erzeugt werden kann.

Die Erfindung betrifft auch ein Verfahren zur Herstellung einer bioziden oder antimikrobiellen Wirkstoffstoffkomponente (W), dadurch gekennzeichnet, dass anorganischen Trägerpartikel (T), die eine Silberkomponente (S) sowie gegebenenfalls weitere antimikrobielle Komponenten enthalten, insbesondere bei Temperaturen von 10 bis 120° C, insbesondere 20 bis 80° C in einem Nass-Mahlverfahren gemahlen werden, bis sie eine glatte Oberfläche aufweisen.

Eine weitere Ausführungsform der Erfindung betrifft ein Verfahren zur Herstellung einer bioziden Wirkstoffstoffkomponente (W), bei dem als anorganisches Trägerpartikel (T) Glasteilchen mit einer mittleren Teilchengröße von 0,002 bis 10 mm, insbesondere 0,02 bis 1 mm, eingesetzt werden, die eine polyedrische Form mit scharfen Kanten und eine nicht glatte Oberfläche aufweisen. Diese werden dann in einem einmaligen oder mehrfachen Nass-Mahlverfahren unterzogen, bis die Glasteilchen eine mittlere Teilchengröße von 0.1 bis 30 µm aufweisen.

Eine weitere Ausführungsform der Erfindung betrifft ein Verfahren, bei dem als anorganische Trägerpartikel (T) Teilchen aus Bor- oder Phosphat-haltigem Glas eingesetzt werden, die als Silberkomponente (S) ein Silberoxid oder aber ein Ag-Salz mit den Anionen aus der Gruppe Chloride, Bromide, Iodide, Sulfate und Tosylate enthalten.

Die eingesetzten Phosphat-Glas Partikel haben vorzugsweise eine Teilchengröße von 0,5 µm bis 5 mm.

Als weitere (oder aber auch als alternative) biozide Metall-Komponente kann auch ein Metallsalz aus den Metallen der Gruppe Zink, Kupfer, Zinn oder Gold mit den o.g. Anionen verwendet werden. Auch Borverbindungen sind geeignet.

Gegenstand der Erfindung ist auch eine antimikrobielle Zubereitung (Z) zum Ausrüsten von Fasern, Formteilen oder Folien enthaltend eine antimikrobielle Wirkstoffstoffkomponente (W) sowie ein oder mehrere Hilfs- und Zusatzstoffe.

Eine weitere Ausführungsform der Erfindung betrifft eine antimikrobielle Zubereitung, die 0,01 % bis 10 % der Wirkstoffkomponente (W) enthält.

Auch Gegenstand der Erfindung sind die mit einer antimikrobiellen Wirkstoffkomponente (W) ausgerüsteten Fasern, Folien, Filme und Formkörper. Die mit einer antimikrobiellen Wirkstoffkomponente (W) ausgerüsteten Fasern können beispielsweise im Wesentlichen aus Polyester, Polyamid, Polypropylen und anderen synthetischen Fasern oder aus Mischungen der genannten Materialien untereinander oder mit natürlichen Fasern bestehen.

Eine weitere Ausführungsform der Erfindung betrifft die Verwendung einer antimikrobiellen Wirkstoffkomponente (W) zum Schutz von Mikrofasern, Endlosfasern, Stapelfasern oder anderen Fasern gegen einen Befall von Bakterien.

Die vorliegende Erfindung betrifft auch die mit einer antimikrobiellen Wirkstoffkomponente (W) ausgerüsteten Fasern bzw. Textilien. Bei den mit einer antimikrobiellen Wirkstoffkomponente ausgerüsteten Fasern kann es sich beispielsweise um Fasern handeln, die im Wesentlichen aus Polyester, Polyamid, Polypropylen oder anderen synthetischen Fasern bestehen. Bei den mit einer antimikrobiellen Wirkstoffkomponente (W) ausgerüsteten Textilien kann es sich vorzugsweise um gewebte Waren, gewirkte Waren, Vliese oder Garne handeln, aber auch andere Textilien können ausgerüstet werden.

Eine weitere Ausführungsform der Erfindung betrifft die Verwendung einer Zusammensetzung enthaltend eine antimikrobiellen Wirkstoffkomponente (W) wie oben beschrieben zum Schutz von Fasern und Textilien gegen einen Befall von Mikroorganismen. Auch die Zusammensetzung selbst ist Gegenstand der Erfindung, wobei diese Zusammensetzung die Komponenten bereits enthalten kann oder aber als "Kit von Komponenten" bereitgestellt werden kann.

Die erfindungsgemäße Zubereitung enthält beispielsweise (bezogen auf das Gesamtgewicht der Zubereitung) 0,01 % bis 10 %, insbesondere 0,1 % bis 5 % einer antimikrobiellen Wirkstoffkomponente (W) wie oben beschrieben.

Die Zubereitung kann auch Lösungsmittel (wie Alkohole) und Hilfsstoffe (wie Tenside oder Netz- und Bindemittel) enthalten.

Insbesondere betrifft die Erfindung die Verwendung der o. g. Zusammensetzungen zum Schutz von Fasern und Textilien gegen einen Befall durch Bakterien, u a. gram-positive und gram-negative, Bakterien.

Die Aufgabe wurde dadurch gelöst, dass eine Nassmahlung für den Wirkstoff entwickelt wurde. Hierbei erfolgt neben der Zerkleinerung eine wesentliche Entschärfung der Kanten der Partikel. Dies konnte unter anderem durch trans-elektronenmikroskopische Aufnahmen gezeigt werden. Diese "Entgratung der Oberfläche" spielt hinsichtlich der Abrasivität bei der späteren Verspinnung und textilen Weiterverarbeitung eine entscheidende Rolle für die verbesserte Verarbeitung.

Die chemische Konsistenz und die Reaktivität der antimikrobiellen anorganischen Additive, insbesondere wenn sie Silber enthalten, lassen ein schadloses Mahlen in wässriger Phase kaum zu. Es kommt zum vorzeitigen Herauslösen von Ag⁺-Ionen, die dem späteren antimikrobiellen Ausrüstungszweck verloren gehen.

Weiterhin kann eine farbliche Vergrauung auftreten, die in der Mehrzahl der Endanwendungen unerwünscht ist. Ferner ist bei der abschließenden Trocknung eine verstärkte Tendenz der Agglomeratbildung zu beobachten.

Dabei werden die gewünschten Feinheitsgrade der Nass-Mahlung gemäß Kenntnissen des Fachmanns je nach Einstellung erreicht. Die Oberflächenform der Teilchen erhält jedoch die gewünschte, bei der weiteren Verarbeitung bevorzugte Glättung, wobei die antimikrobielle Wirkung vollständig erhalten bleibt.

Um eine Agglomerat-freie Einarbeitung in die Polymermasse, beispielsweise zur Herstellung von Master Batches zu gewährleisten, können noch während des Mahlprozesses entsprechende, dem Fachmann im Prinzip bekannte, zum späteren Polymer kompatible Oberflächen-Modifikatoren zugesetzt werden.

Die durchzuführende Nass-Mahlung bezweckt damit nicht ausschließlich eine Zerkleinerung der Partikel, sondern ganz wesentlich auch eine Glättung der Oberfläche der Partikel. Derartige Materialmodifikationen sind sinnvoll für alle Anwendungen, in denen eine Abrasion einen störenden Effekt hat oder stören kann.

Der Einsatz von nass gemahlenen Wirkstoffen erfolgt z. B. in folgenden Produkten:
- Spinnfasern für Endlosfilamente, Stapelfasern und Vliestextilien,
- Folien, sowohl Guss- als auch Blasfolien,
- Extrusions- und Co- Extrusionsprodukten,
- Farben, Lacken und Filmen.

Dabei wird auch darauf geachtet, dass die Endkorngröße auf die jeweiligen Anforderungen der Endanwendung eingestellt wird, um gleichzeitig die störende Abrasion zu vermeiden und ausreichend große Partikel zur Sicherstellung der antimikrobiellen Wirkung zur Verfügung zu haben. Dabei darf die eingesetzte Korngröße in sensiblen Anwendungen wie Spinnen oder Folieblasen mechanisch, technologisch, funktionell und optisch nicht stören.

Als nass gemahlene Wirkstoffe werden z. B. folgende im Handel erhältliche bioziden Produkte eingesetzt:
Sanitized-Silber von SANITIZED AG (Schweiz),
Ionpure von Ishizuka (Japan),
JMAC von Clariant (Schweiz),
Novaron von Toagosai (Japan),
Alphasan von Milliken (USA)
Irgaguard- Silber von CIBA (Schweiz),
Zeomic- Silber von AgIon (Hersteller in USA).

Bei diesen Produkten handelt es sich im Wesentlichen um Produkte, die Silber als Wirkstoff enthalten. Sie enthalten bevorzugt 0,1 bis 10 Gew.-% Silber in einem anorganischen Träger, der z. B. aus Glas, Titandioxid, Zirkoniumphosphat oder Zeolith besteht.

Die Erfindung wird auch durch die nachfolgenden Beispiele näher erläutert:

### Beispiel 1

### Teilchengröße und Teilchenform

Ein silberhaltiges Phosphatglas wird in einem herkömmlichen Trockenmahlprozess gemahlen.

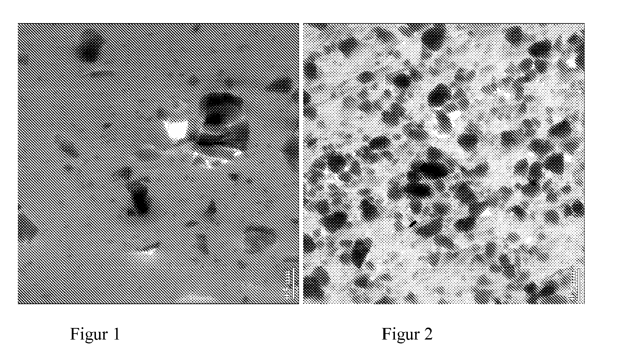

Die photographische Darstellung in Figur 1 zeigt grobe und kantige Teile mit sehr unterschiedlicher Größe an der Materialoberfläche. Diese führen an Fadenleitorganen zu einer erheblichen Abrasion sowie zur Bildung einer rauhen Oberfläche der Fadenleitelemente. Diese Oberfläche selbst bewirkt wiederum einen Schmirgel-Effekt am Faden und führt zu einer Fibrillierung und zu Kapillarbrüchen.

Die nass gemahlenen Teilchen des silberhaltigen Phosphatglases weisen hingegen eine homogene Teilchengrößenverteilung und eine geglättete Oberfläche auf (siehe Figur 2). Sie führen wie in Beispiel 2 weiter ausgeführt nur noch zu einer minimalen und technisch vernachlässigbaren Abrasion.

### Beispiel 2

### Messung der Abrasion an einem Faden aus synthetischem Material

Abrasionswerte können mit Hilfe des in der Literatur bekannten Abrasionstesters "Honigmann" bestimmt werden.

Dazu läuft im vorliegenden Test ein Faden (aus Polyester mit einem Titer von 75 dtex und 64 Einzelfäden) in definiertem Klima mit definierter Vorspannkraft und definierter Prüflänge über eine Kupferkante. Der erzeugte Einschnitt wird gemessen.

Es ergaben sich folgende Messwerte:

| PES 75f64 | Fall | Gehalt an Wirkstoff in % | Abrasion in µm/ 1000 m |
|---|---|---|---|
| Vergleich: Silber in Phosphatglas, (Ag-Komponente: Ionpure ZAF) Trockenmahlung, 2µm (D98) | 1 | 0.4 | 229 |
| Vergleich: Polyester ohne Silber; Halbmatt, d. h. mit 0.3% TiO₂ | 2 | 0 | 3.3 |
| Polyester ohne Silber; Matt, d. h. mit 1.5% TiO₂ | 3 | 0 | 20.0 |
| Polyester mit SANITIZED- Silber, Nassmahlung, 0.5µm (D98) und 0.3% TiO₂ | 4 | 0.6 | 4.9 |

Das nass auf eine mittlere Teilchengröße von 0.5µm gemahlene SANITIZED-Silber (Fall 4) weist trotz des Gehalts an biozider Komponente eine deutliche geringere Abrasion gegenüber dem nach einem vergleichbaren Verfahren mit Ionpure ZAF und Trockenmahlung (Fall 1) gewonnenen Produkt auf.

Die Abrasion von Fall 4 entspricht einem halbmatt-Polyester ohne Biozid (Fall 2). Sie ist technisch nahezu unbedeutend und deutlich geringer als bei dem matt- Polyester ohne Biozid (Fall 3).

### Beispiel 3

### Antibakterielle Wirkung

Aus den gesponnenen Filamenten wurden Strickstrümpfe hergestellt die nach 1, 5 und 10 Wäschen auf antibakterielle Wirkung untersucht wurden.

Die Wäschen erfolgten jeweils nach der Norm EN ISO 6330 (6A). Die antibakterielle Wirkung wurde mit der Methode ASTM E 21-49 und dem Keim Staphylococcus aureus ATCC 6538 getestet.

| Produkt | Zugabe* | Wirkstoff | Wäschen | Keimreduktion | Bakteriostatische Aktivität |
|---|---|---|---|---|---|
| | % | % | Anzahl | Log Einheiten | Log Einheiten |
| Ohne Silber, nur Polyester | 0 | 0 | 1 | 0.16 | |
| Polyester mit Sanitized ** | 2.0 | 0.4 | 1 | 2.33 | 2.17 |
| Polyester mit Sanitized ** | 2.0 | 0.4 | 5 | 2.96 | 2.80 |
| Polyester mit Sanitized ** | 2.0 | 0.4 | 10 | >3.99 | >3.83 |

| | | | | | |
|---|---|---|---|---|---|
| * Masterbatch **Sanitized Silber MasterBatch | | | | | |

Die anfangs durch die Herstellung bedingt auf dem Gewebe vorhandene Spinnpräparation kann in den ersten Waschzyklen zu einer gewissen Blockade des Silber-Wirkstoffes führen, der erst nach mehreren Wäschen seine volle Wirkung entfalten kann.

Eine Keimreduktion um 2 Log Einheiten oder 99% wird als sehr gute antibakterielle Wirkung bewertet.

### Beispiel 4

### Titer, Faserfeinheit

Bei der Auswahl der mittleren Korngröße sind - wie oben dargestellt - zwei gegenläufige Anforderungen zu berücksichtigen. Einerseits verlangt die Spinnsicherheit eine möglichst geringe Korngröße und die Forderung nach minimaler Abrasion wird mit möglichst idealer Glattheit (wenige Unebenheiten; keine scharfen Kanten) der Teilchen erfüllt.

Dem gegenüber besteht die Gefahr, dass zu kleine Teilchen nicht die Oberfläche der Faser durchbrechen und ihre antibakterielle Wirkung nicht oder nur ungenügend entfalten können.

Durch Versuche ergab sich jeweils für unterschiedliche Fasertypen und Einsatzgebiete ein optimaler Bereich für die Herstellung von Endlos- und Stapelfasern, der beiden Forderungen gerecht wird.

Dies wird durch die nachfolgenden Messungsergebnisse verdeutlicht:

| Fasertyp, Faserfeinheit | Mittlere Korngröße nach der Nassmahlung µm |
|---|---|
| Super- Mikro- Faser | 0.01 - 0.5 |
| Mikrofaser | 0.1 - 1.0 |
| Baumwollfasertypen | 0.2 - 2.0 |
| Teppich- und grobe Fasern | 0.5 - 10 |

### Beispiel 5

### Einsatz der bioziden Komponente für Folien, Co- Extrusionsschichten und Lacke

Mit dem Nassmahlungsverfahren stehen kompakte, kleine und antimikrobiell wirkende Teilchen zur Verfügung, die weder die Produktqualität beinträchtigen, noch eine übermäßige Abnutzung der Werkzeuge und Maschinen verursachen.

In Abhängigkeit von der jeweiligen Schichtdicke des auszurüstenden Produktes sollte eine gewisse Mindestteilchengröße zur vollen Entfaltung der antimikrobiellen Wirkung eingesetzt werden. Die Teilchengröße sollte ferner den Zehnten Teil der Dicke des auszurüstenden Materials nicht übersteigen und kann bei dickeren Schichten und kompakten Teilen einige Mikrometer betragen.

## Patentansprüche

1. Biozide Wirkstoffstoffkomponente (W) auf Basis von nass gemahlenen anorganischen Trägerpartikeln (T), die eine Silberkomponente (S) sowie gegebenenfalls weitere antimikrobielle Komponenten enthalten, wobei die anorganischen Trägerpartikel (T) eine glatte Oberfläche aufweisen und durch Nassmahlung erzeugt werden.

2. Biozide Wirkstoffstoffkomponente (W) gemäß Anspruch 1, **dadurch gekennzeichnet, dass** als fein gemahlene anorganischen Trägerpartikel (T) Glaspartikel mit einer mittleren Teilchengröße von 0,01 bis 100 µm und einem Gehalt an Silberkomponente (S) von 0,01 bis 10 Gew.-% eingesetzt werden.

3. Biozide Wirkstoffstoffkomponente (W) gemäß Anspruch 1 oder Anspruch 2, **dadurch gekennzeichnet, dass** als anorganischen Trägerpartikel (T) Glaspartikel mit einer mittleren Teilchengröße von 0,1 bis 30 µm und einem Gehalt an Silberkomponente (S) von 0,1 bis 5 Gew.-% eingesetzt werden.

4. Biozide Wirkstoffstoffkomponente (W) gemäß einem der Ansprüche 1 bis 3, **dadurch gekennzeichnet, dass** als anorganischen Trägerpartikel (T) Bor-haltige und/oder Phosphat-haltige Gläser eingesetzt werden, die als Silberkomponente (S) ein Silberoxid oder ein Silbersalz enthalten.

5. Biozide Wirkstoffstoffkomponente (W) gemäß einem der Ansprüche 1 bis 4, **dadurch gekennzeichnet, dass** die Trägerpartikel (T) eine glatte Oberfläche aufweisen, wobei diese durch ein Nass-Mahlverfahren erzeugt wurden.

6. Biozide Wirkstoffstoffkomponente (W) gemäß Anspruch 5, **dadurch gekennzeichnet, dass** die glatte Oberfläche der Trägerpartikel (T) aus Glas durch ein Nass-Mahlverfahren mittels einer Kugelmühle oder einem Dreiwalzwerk erzeugt wurde.

7. Biozide Wirkstoffstoffkomponente (W) gemäß einem der Ansprüche 1 bis 6, **dadurch gekennzeichnet, dass** bei dem Mahlverfahren der Trägerpartikel (T) Phosphat-Glas Partikel mit einer Teilchengröße von 0,5 µm bis 5 mm eingesetzt werden.

8. Verfahren zur Herstellung einer bioziden Wirkstoffstoffkomponente (W), **dadurch gekennzeichnet, dass** anorganischen Trägerpartikel (T), die eine Silberkomponente (S) sowie gegebenenfalls weitere biozide oder antimikrobielle Komponenten enthalten, bei Temperaturen von 10 bis 120° C in einem Nass-Mahlverfahren gemahlen werden, wobei sie eine glatte Oberfläche erhalten.

9. Verfahren zur Herstellung einer bioziden Wirkstoffstoffkomponente (W) gemäß Patentanspruch 8, **dadurch gekennzeichnet, dass** als anorganische Trägerpartikel (T) biozide Glasteilchen mit einer mittleren Teilchengröße von 0,5 µm bis 5 mm eingesetzt werden, die eine polyedrische Form mit scharfen Kanten und eine nicht glatte Oberfläche aufweisen, und diese einem einmaligen oder mehrfachen Nass-Mahlverfahren in Gegenwart eines Lösungsmittel unterzogen werden, bis die Glasteilchen eine mittlere Teilchengröße von 0,1 bis 30 µm aufweisen.

10. Verfahren gemäß einem der Ansprüche 8 oder 9, **dadurch gekennzeichnet, dass** als anorganische Trägerpartikel (T) Teilchen aus Bor- oder Phosphat-haltigem Glas eingesetzt werden, die als Silberkomponente (S) ein Silberoxid oder ein Silbersalz aus der Gruppe der Chloride, Bromide, Iodide, Sulfate und Tosylate enthalten.

11. Verfahren gemäß einem der Ansprüche 8 bis 10, **dadurch gekennzeichnet, dass** anorganische Trägerpartikel (T) eingesetzt werden, die eine Silberkomponente (S) und zusätzlich eine weitere biozide Komponente enthalten.

12. Biozide Zubereitung (Z) zum Ausrüsten von Fasern enthaltend eine biozide Wirkstoffstoffkomponente (W) gemäß einem der Patentansprüche 1 bis 7 sowie einen oder mehrere Hilfs- oder Zusatzstoffe.

13. Biozide Zubereitung gemäß Patentanspruch 12, **dadurch gekennzeichnet, dass** sie 0,01 % bis 10 % der Wirkstoffkomponente (W) enthält.

14. Mit einer bioziden Wirkstoffkomponente (W) gemäß einem der Patentansprüche 1 bis 7 ausgerüstete Fasern, Folien oder Filme.

15. Mit einer bioziden Wirkstoffkomponente (W) ausgerüstete Faser gemäß Anspruch 14, **dadurch gekennzeichnet, dass** sie im Wesentlichen aus Polyester, Polyamid, Polypropylen oder anderen synthetischen Fasern oder aus Mischungen der genannten Materialien untereinander oder mit natürlichen Fasern besteht.

16. Verwendung einer bioziden Wirkstoffkomponente (W) gemäß einem der Patentansprüche 1 bis 7 zum Schutz von Mikrofasern, Endlosfasern, Stapelfasern oder anderen Fasern gegen einen Befall von Bakterien, Pilzen, Algen und Milben.
